# EUROPÄISCHE PATENTSCHRIFT

(11) **EP 3 077 438 B1**
(45) Veröffentlichungstag und Bekanntmachung des Hinweises auf die Patenterteilung: **07.03.2018**
(21) Anmeldenummer: 14802646.1
(22) Anmeldetag: 24.11.2014
(51) Int. Cl.: C08G 18/48, C08G 18/50, C08G 18/66, C08G 18/72, C08G 18/76, C08G 18/79, C08G 18/28, C08G 18/32, C08K 5/42, C08G 101/00, C08J 9/00, C08G 18/08

(54) **POLYURETHANE MIT REDUZIERTER ALDEHYDEMISSION**
POLYURETHANES HAVING REDUCED EMISSIONS OF ALDEHYDE
POLYURÉTHANES AYANT DES ÉMISSIONS EN ALDÉHYDE RÉDUITES

(30) Priorität: 02.12.2013 EP 13195356
(43) Veröffentlichungstag der Anmeldung: 12.10.2016
(73) Patentinhaber: BASF SE, 67056 Ludwigshafen am Rhein (DE)
(72) Erfinder: OTERO MARTINEZ, Iran, 32351 Stemwede (DE)
(74) Vertreter: BASF IP Association
(86) Internationale Anmeldenummer: PCT/EP2014/075387
(87) Internationale Veröffentlichungsnummer: WO 2015/082242

(56) Entgegenhaltungen:
- DE-A1- 2 615 804
- DE-A1- 10 116 757
- US-A1- 2008 281 013

## Beschreibung

Die vorliegende Erfindung betrifft ein Verfahren zur Herstellung von Polyurethanen bei dem man (a) Polyisocyanat, (b) polymeren Verbindungen mit gegenüber Isocyanaten reaktiven Gruppen, (c) Katalysatoren, (d) Schwefel-Kohlenstoffverbindungen, enthaltend ein oder mehrere Anionen, ausgewählt aus der Gruppe bestehend aus Sulfinsäurederivaten gemäß der allgemeinen Formel (I) 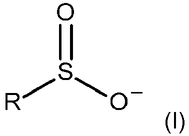 wobei R für einen beliebigen substituierten oder unsubstituierten Kohlenwasserstoffrest steht mit der Maßgabe, dass das Kohlenstoffatom, das an das Schwefelatom gebunden ist, ein aliphatisches Kohlenstoffatom ist, und gegebenenfalls (e) Treibmittel, (f) Kettenverlängerungs- und oder Vernetzungsmittel und (g) Hilfsmittel und/oder Zusatzstoffe zu einer Reaktionsmischung vermischt und die Reaktionsmischung zum Polyurethan ausreagieren lässt. Weiter betrifft die vorliegende Erfindung Polyurethane, die nach einem solchen Verfahren hergestellt wurden und den Einsatz solchen Polyurethane im Innenraum von Verkehrsmitteln.

Polyurethane zeichnen sich durch vielfältige Einsatzmöglichkeiten aus, beispielsweise in der Möbelindustrie als Sitzpolster oder als Bindemittel für Spanplatten, als Isoliermaterial in der Bauindustrie, als Isoliermaterial, beispielsweise von Rohren, Warmwasserspeichern oder Kühlschränken und als Verkleidungsteile, beispielsweise im Fahrzeugbau. Insbesondere im Automobilbau werden Polyurethane häufig eingesetzt, beispielsweise in der Automobilaußenverkleidung als Spoiler, Dachelemente, Federelemente sowie in der Automobilinnenverkleidung als Dachverkleidungen, Teppichhinterschäumungen, Türverkleidungen, Lenkräder, Schaltknöpfe und Sitzpolster.

Dabei ist bekannt, dass Polyurethane zu Emissionen organischer Substanzen neigen, die zu Geruchsbelästigungen oder im Fall von hohen Konzentrationen zu Unwohlsein führen können. Dabei sind insbesondere abgeschlossene Räume, beispielsweise im Innern von Gebäuden oder Fahrzeugen, beispielsweise Automobilen besonders betroffen. Ein Beispiel für solche Emissionen ist die Emission von Aldehyden. Dabei gibt es bereits unterschiedliche Ansätze zur Verringerung der Aldehydemissionen. So beschreibt Beispielsweise EP 1428847, dass Aldehydemissionen durch Zugabe von polymeren Stoffen mit primären und/oder secundären Aminogruppen vermindert werden können.

JP 2005-154599 beschreibt die Reduktion von Aldehydemissionen in Polyurethanschaumstoffen durch Zugabe von 0,001 bis 0,01 Gew.-% eines Reduktionsmittels, ausgewählt aus Natriumborhydrid, Aluminiumlithiumhydrid, Natriumthiosulfat, Natriumsulfit, Hydrazinverbindungen, Ascorbinsäure und reduzierendem Zucker. Dabei ist die Aldehydemission in Schaumstoffen nach JP 2005-154599 immer noch verbesserungswürdig.

US 2008/0281013 beschreibt den Einsatz von Sulfiten und/oder Disulfiten im Bereich von 0,02 bis 2 Gew.-% zur Reduzierung von Aldehydemissionen.

Aufgabe der vorliegenden Erfindung war es, ein weiteres, verbessertes Verfahren zur Reduzierung von Aldehydemissionen in Polyurethanen, insbesondere Polyurethanschaumstoffen zu liefern. Insbesondere sollen dabei kostengünstige und einfach zu handhabende Stoffe zum Einsatz kommen, die die Herstellung der Polyurethane nicht beeinträchtigen.

Überraschenderweise konnte die erfindungsgemäße Aufgabe gelöst werden durch ein Verfahren zur Herstellung von Polyurethanen bei dem man (a) Polyisocyanat, (b) polymeren Verbindungen mit gegenüber Isocyanaten reaktiven Gruppen, (c) Katalysatoren, (d) Schwefel-Kohlenstoffverbindungen, enthaltend ein oder mehrere Anionen, ausgewählt aus der Gruppe bestehend aus Sulfinsäurederivaten gemäß der allgemeinen Formel (I) 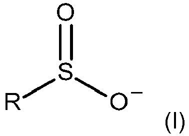 wobei R für einen beliebigen substituierten oder unsubstituierten Kohlenwasserstoffrest steht mit der Maßgabe, dass das Kohlenstoffatom, das an das Schwefelatom gebunden ist, ein aliphatisches Kohlenstoffatom ist, und gegebenenfalls (e) Treibmittel, (f) Kettenverlängerungs- und oder Vernetzungsmittel und (g) Hilfsmittel und/oder Zusatzstoffe zu einer Reaktionsmischung vermischt und die Reaktionsmischung zum Polyurethan ausreagieren lässt.

Polyurethan im Sinn der Erfindung umfasst alle bekannten Polyisocyanat-Polyadditionsprodukte. Diese umfassen Additionsprodukte aus Isocyanat und Alkohol sowie modifizierte Polyurethane, die Isocyanurat-, Allophanat-, Harnstoff-, Carbodiimid-, Uretonimin-, Biuretstrukturen und weitere Isocyanatadditionsprodukte enthalten können. Diese erfindungsgemäßen Polyurethane umfassen insbesondere massive Polyisocyanat-Polyadditionsprodukte, wie Duromere, und Schaumstoffe auf Basis von Polyisocyanat-Polyadditionsprodukten, wie Weichschaumstoffe, Halbhartschaumstoffe, Hartschaumstoffe oder Integralschaumstoffe sowie Polyurethanbeschichtungen und Bindemittel. Weiter sind unter Polyurethanen im Sinn der Erfindung Polymerblends, enthaltend Polyurethane und weitere Polymere, sowie Schaumstoffe aus diesen Polymerblends zu verstehen. Vorzugsweise sind die erfindungsgemäßen Polyurethane Polyurethanschaumstoffe oder massive Polyurethane, die, abgesehen von den im Folgenden erläuterten Polyurethanbausteinen (a) bis (g) keine weiteren Polymere enthalten.

Im Rahmen der Erfindung werden unter Polyurethan-Schaumstoffen Schaumstoffe gemäß DIN 7726 verstanden. Dabei weisen erfindungsgemäße Polyurethan-Weichschaumstoffe eine Druckspannung bei 10 % Stauchung bzw. Druckfestigkeit nach DIN 53 421 / DIN EN ISO 604 von 15 kPa und kleiner, vorzugsweise 1 bis 14 kPa und insbesondere 4 bis 14 kPa auf. Erfindungsgemäße Polyurethan-Halbhartschaumstoffe weisen eine Druckspannung bei 10 % Stauchung nach DIN 53 421 / DIN EN ISO 604 von größer 15 bis kleiner 80 kPa auf. Erfindungsgemäße Polyurethan-Halbhartschaumstoffe und Polyurethan-Weichschaumstoffe verfügen nach DIN ISO 4590 über eine Offenzelligkeit von vorzugsweise größer 85 %, besonders bevorzugt größer 90 %. Weitere Details zu erfindungsgemäßen Polyurethan-Weichschaumstoffen und Polyurethan-Halbhartschaumstoffen finden sich im "Kunststoffhandbuch, Band 7, Polyurethane", Carl Hanser Verlag, 3. Auflage 1993, Kapitel 5.

Die erfindungsgemäßen Polyurethan-Hartschaumstoffe weisen eine Druckspannung bei 10 % Stauchung von größer gleich 80 kPa, bevorzugt größer gleich 120 kPa, besonders bevorzugt größer gleich 150 kPa auf. Weiterhin verfügt der Polyurethan-Hartschaumstoff nach DIN ISO 4590 über eine Geschlossenzelligkeit von größer 80 %, bevorzugt größer 90 %. Weitere Details zu erfindungsgemäßen Polyurethan-Hartschaumstoffen finden sich im "Kunststoffhandbuch, Band 7, Polyurethane", Carl Hanser Verlag, 3. Auflage 1993, Kapitel 6.

Unter elastomeren Polyurethan-Schaumstoffen sind im Rahmen dieser Erfindung Polyurethan-Schaumstoffe nach DIN 7726 zu verstehen, die nach kurzzeitiger Verformung um 50 % der Dicke nach DIN 53 577 nach 10 Minuten keine bleibende Verformung über 2 % ihrer Ausgangsdicke aufweisen. Dabei kann es sich um einen Polyurethan-Hartschaumstoff, einen Polyurethan-Halbhartschaumstoff oder einen Polyurethan-Weichschaumstoff handeln.

Bei Polyurethan-Integralschaumstoffen handelt es sich um Polyurethan-Schaumstoffe nach DIN 7726 mit einer Randzone, die bedingt durch den Formgebungsprozess eine höhere Dichte als der Kern aufweisen. Die über den Kern und die Randzone gemittelte Gesamtrohdichte liegt dabei vorzugsweise über 100 g/L. Auch bei Polyurethan-Integralschaumstoffen im Sinn der Erfindung kann es sich um Polyurethan-Hartschaumstoffe, Polyurethan-Halbhartschaumstoffe oder Polyurethan-Weichschaumstoffe handeln. Weitere Details zu erfindungsgemäßen Polyurethan-Integralschaumstoffen finden sich im "Kunststoffhandbuch, Band 7, Polyurethane", Carl Hanser Verlag, 3. Auflage 1993, Kapitel 7.

Dabei werden erfindungsgemäße Polyurethane erhalten indem man Polyisocyanate (a) mit polymeren Verbindungen mit gegenüber Isocyanaten reaktiven Gruppen (b), gegebenenfalls Katalysatoren (c), Schwefel-Kohlenstoffverbindungen (d) und gegebenenfalls Treibmittel (e), Kettenverlängerer (f) und sonstigen Hilfs- und Zusatzstoffen (g) zu einer Reaktionsmischung vermischt und ausreagieren lässt.

Dabei ist das erfindungsgemäße Polyurethan in einer bevorzugten Ausführungsform ein Polyurethanschaumstoff mit einer mittleren Dichte von 20 bis 850 g/L, vorzugsweise ein Polyurethanhalbhartschaumstoff oder ein Polyurethanweichschaumstoff oder ein Polyurethanhartschaumstoff, besonders bevorzugt ein elastomerer Polyurethanweichschaumstoff ein Polyurethanhalbhartschaumstoff oder ein elastomerer Polyurethanintegralschaumstoff. Der elastomere Polyurethanintegralschaumstoff weist vorzugsweise eine über den Kern und die Randzone gemittelte Dichte von 150 bis 500 g/L auf. Der Polyurethanweichschaumstoff weist vorzugsweise eine mittlere Dichte von 10 bis 100 g/L auf. Der Polyurethanhalbhartschaumstoff weist vorzugsweise eine mittlere Dichte von 70 bis 150 g/L auf.

In einer weiteren bevorzugten Ausführungsform ist das Polyurethan ein massives Polyurethan mit einer Dichte von vorzugsweise mehr als 850 g/L, vorzugsweise 900 bis 1400 g/L und besonders bevorzugt 1000 bis 1300 g/L. Dabei wird ein massives Polyurethan im Wesentlichen ohne Zugabe eines Treibmittels erhalten. Geringe Mengen an Treibmittel, beispielsweise Wasser, das herstellungsbedingt in den Polyolen enthalten ist, gilt dabei nicht als Treibmittel. Vorzugsweise enthält die Reaktionsmischung zur Herstellung des kompakten Polyurethans weniger als 0,2 Gew.-%, besonders bevorzugt weniger als 0,1 Gew.-% und insbesondere weniger als 0,05 Gew.-% Wasser.

Dabei wird das erfindungsgemäße Polyurethan vorzugsweise im Innenraum von Transportmitteln, wie Schiffen, Flugzeugen, LKW's, PKW's oder Bussen, besonders bevorzugt PKW's oder Bussen und insbesondere PKW's eingesetzt. Dabei wird der Innenraum von PKW's und Bussen im Folgenden als Automobilinnenraumteil bezeichnet. Ein Polyurethanweichschaumstoff kann dabei als Sitzpolster eingesetzt werden, ein Polyurethanhalbhartschaumstoff als Hinterschäumung von Tür-Seitenelementen oder Instrumententafeln, ein Polyurethanintegralschaumstoff als Lenkrad, Schaltknopf oder Kopfstütze und ein massives Polyurethan beispielsweise als Kabelummantelung.

Die zur Herstellung der erfindungsgemäßen Polyurethane verwendeten Polyisocyanatkomponenten (a) umfassen alle zur Herstellung von Polyurethanen bekannten Polyisocyanate. Diese umfassen die aus dem Stand der Technik bekannten aliphatischen, cycloaliphatischen und aromatischen zwei- oder mehrwertigen Isocyanate sowie beliebige Mischungen daraus. Beispiele sind 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus.

Bevorzugt werden 2,4- und/oder 2,6-Tolylendiisocynat (TDI) oder deren Mischungen, monomere Diphenylmethandiisocyanate und/oder höherkernige Homologe des Diphenylmethandiisocyanats (Polymer-MDI) und deren Mischungen verwendet. Weitere mögliche Isocyanate sind beispielsweise im "Kunststoffhandbuch, Band 7, Polyurethane", Carl Hanser Verlag, 3. Auflage 1993, Kapitel 3.2 und 3.3.2 angegeben.

Die Polyisocyanatkomponente (a) kann in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Polymeren Verbindungen mit gegenüber Isocyanaten reaktiven Gruppen (b) (Bestandteil (a-2)) und/oder Kettenverlängerern (c) (Bestandteil (a-3)) zum Isocyanatprepolymer umgesetzt werden.

Polymere Verbindungen mit gegenüber Isocyanaten reaktiven Gruppen (a-2) und Kettenverlängerungsmittel (a3) sind dem Fachmann bekannt und beispielsweise beschrieben im "Kunststoffhandbuch, 7, Polyurethane", Carl Hanser-Verlag, 3. Auflage 1993, Kapitel 3.1. So können beispielsweise als Polymere Verbindungen mit gegenüber Isocyanaten reaktiven Gruppen (a-2) auch die nachfolgend unter (b) beschriebenen Polymere Verbindungen mit gegenüber Isocyanaten reaktiven Gruppen eingesetzt werden.

Als polymere Verbindungen mit gegenüber Isocyanaten reaktiven Gruppen (b) können alle bekannten Verbindungen mit mindestens zwei gegenüber Isocyanaten reaktiven Wasserstoffatomen eingesetzt werden, beispielsweise solche mit einer Funktionalität von 2 bis 8 und einem zahlenmittleren Molekulargewicht von 400 bis 15000 g/mol. So können beispielsweise Verbindungen, ausgewählt aus der Gruppe der Polyetherpolyole, Polyesterpolyole oder Mischungen daraus, verwendet werden.

Polyetherole werden beispielsweise hergestellt aus Epoxiden, wie Propylenoxid und/oder Ethylenoxid, oder aus Tetrahydrofuran mit wasserstoffaktiven Starterverbindungen, wie aliphatischen Alkoholen, Phenolen, Aminen, Carbonsäuren, Wasser oder Verbindungen auf Naturstoffbasis, wie Saccharose, Sorbit oder Mannit, unter Verwendung eines Katalysators. Zu nennen sind hier basische Katalysatoren oder Doppelmetallcyanidkatalysatoren, wie beispielweise in PCT/EP2005/010124, EP 90444 oder WO 05/090440 beschrieben.

Polyesterole werden z.B. hergestellt aus aliphatischen oder aromatischen Dicarbonsäuren und mehrwertigen Alkoholen, Polythioetherpolyolen, Polyesteramiden, hydroxylgruppenhaltigen Polyacetalen und/oder hydroxylgruppenhaltigen aliphatischen Polycarbonaten, vorzugsweise in Gegenwart eines Veresterungskatalysators. Weitere mögliche Polyole sind beispielsweise im "Kunststoffhandbuch, Band 7, Polyurethane", Carl Hanser Verlag, 3. Auflage 1993, Kapitel 3.1 angegeben.

Neben den beschriebenen Polyetherolen und Polyesterolen können auch füllstoffhaltige Polyetherole oder Polyesterole, auch als Polymerpolyetherole oder Polymerpolyesterole bezeichnet, eingesetzt werden. Solche Verbindungen enthalten vorzugsweise dispergierte Partikel aus thermoplastischen Kunststoffen, beispielsweise aufgebaut aus olefinischen Monomeren, wie Acrylnitril, Styrol, (Meth)Acrylaten, (Meth)Acrylsäure und/oder Acrylamid. Solche Füllstoffhaltigen Polyole sind bekannt und kommerziell erhältlich. Ihre Herstellung ist beispielweise beschrieben in DE 111 394, US 3 304 273, US 3 383 351, US 3 523 093, DE 1 152 536, DE 1 152 537 WO 2008/055952 und WO2009/128279.

In einer besonders bevorzugten Ausführungsform der vorliegenden Erfindung enthält die Komponente (b) Polyetherole und weiter bevorzugt keine Polyesterole.

Katalysatoren c) beschleunigen die Reaktion der Polyole (b) und gegebenenfalls Kettenverlängerungs- und Vernetzungsmittel (f) sowie chemischem Treibmittel (e) mit den organischen, gegebenenfalls modifizierten Polyisocyanaten (a) stark. Dabei enthalten die Katalysatoren (c) einbaubare Aminkatalysatoren. Diese weisen mindestens eine, vorzugsweise 1 bis 8 und besonders bevorzugt 1 bis 2 gegenüber Isocyanaten reaktive Gruppen, wie primäre Amingruppen, sekundäre Amingruppen, Hydroxylgruppen, Amide oder Harnstoffgruppen, vorzugsweise primäre Amingruppen, sekundäre Amingruppen, Hydroxylgruppen, auf. Einbaubare Aminkatalysatoren werden meist zur Herstellung emissionsarmer Polyurethane eingesetzt, die insbesondere im Automobilinnenbereich eingesetzt werden. Solche Katalysatoren sind bekannt und beispielsweise in EP1888664 beschrieben. Diese umfassen Verbindungen, die neben der bzw. den gegenüber Isocyanaten reaktiven Gruppen vorzugsweise eine oder mehrere tertiäte Aminogruppen aufweisen. Vorzugsweise trägt mindestens eine der tertiären Aminogruppen der einbaubaren Katalysatoren mindestens zwei aliphatische Kohlenwasserstoffreste, vorzugsweise mit 1 bis 10 Kohlenstoffatomen je Rest, besonders bevorzugt mit 1 bis 6 Kohlenstoffatomen je Rest. Besonders bevorzugt tragen die tertiären Aminogruppen zwei Reste, unabhängig voneinander ausgewählt aus Methyl- und Ethylrest sowie einen weiteren organischen Rest. Beispiele für einsetzbare einbaubare Katalysatoren sind beispielsweise Bisdimethylaminopropylharnstoff, Bis(N,N-Dimethylaminoethoxyethyl)carbamat, Dimethylaminopropylharnstoff, N,N,N-Trimethyl-N-hydroxyethylbis(aminopropylether), N,N,N-Trimethyl-N-hydroxyethylbis(aminoethylether), Diethylethanolamin, Bis(N,N-dimethyl-3-aminopropyl)amin, Dimethylaminopropylamin, 3-Dimethyaminopropyl-N,N-dimethylpropan-1,3-diamin, Dimethyl-2-(2-aminoethoxyethanol) und (1,3-Bis(dimethylamino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3 aminopropyl)-bis(amino-ethylether), 3-Dimethylaminoisopropyl-diisopropanolamin oder Mischungen davon.

Neben den einbaubaren Aminkatalysatoren können weiter übliche Katalysatoren zur Herstellung der Polyurethane eingesetzt werden. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt. In einer besonders bevorzugten Ausführungsform werden ausschließlich einbaubare Katalysatoren als Katalysatoren (c) eingesetzt.

Werden Katalysatoren (c) eingesetzt, können diese beispielsweise in einer Konzentration von 0,001 bis 5 Gew.-%, insbesondere 0,05 bis 2 Gew.-% als Katalysator bzw. Katalysatorkombination, bezogen auf das Gewicht der Komponente (b) eingesetzt werden.

Die Schwefel-Kohlenstoffverbindungen (d) enthalten ein oder mehrere Anionen, ausgewählt aus der Gruppe bestehend aus Sulfinsäurederivaten gemäß der allgemeinen Formel (I)

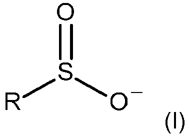

Dabei können die Verbindungen jeweils einzeln oder als Mischungen eingesetzt werden. Als Gegenionen können beliebige Metallionen dienen, beispielsweise Metallionen, ausgewählt aus der Gruppe, bestehend aus Alkali-, Erdalkali- oder Übergangsmetallionen. Vorzugsweise sind die Gegenionen Alkalimetallionen, wie Natrium oder Kaliumionen. Der Rest R steht für einen beliebigen substituierten oder unsubstituierten Kohlenwasserstoffrest. Es ist dabei erfindungswesentlich, dass der Rest R₂ über eine Kohlenstoff-Schwefelbindung an das Schwefelatom gebunden ist wobei das Kohlenstoffatom ein aliphatisches Kohlenstoffatom ist. Aliphatische Kohlenstoffatome in Sinn der vorliegenden sind Kohlenstoffatome, die keinem aromatischen System angehören. Vorzugsweise ist das an das Schwefelatom gebundene aliphatische Kohlenstoffatom sp³-Hybridisiert.

In einer besonders bevorzugten Ausführungsform enthalten die Reste R 1 bis 15, vorzugsweise 2 bis 10 und besonders bevorzugt 2 bis 6 Kohlenstoffatome. Weiter können die Reste R substituierte oder unsubstituierte aromatische Gruppen und/oder funktionelle Gruppen, wie Carbonsäuregruppen oder Derivate von Carbonsäuregruppen tragen. Dabei handelt es sich im Rahmen der gegenwärtigen Erfindung bei Derivaten von Carbonsäuregruppen vorzugsweise um Ester, wie aliphatische Ester, oder Salze, wie Alkalimetallsalze und vorzugsweise Natriumsalze der Carbonsäuregruppen. Beispiele für weitere mögliche funktionelle Gruppen sind primäre, sekundere und/ oder tertiäre Amingruppen oder Hydroxylgruppen. In einer besonders bevorzugten Ausführungsform enthalten die Reste R eine oder mehrere gegenüber Isocyanat reaktive Gruppen, bevorzugt OH, NH oder NH₂-Gruppen. Insbesondere enthalten die Reste R eine gegenüber Isocyanaten reaktive Gruppe, bevorzugt eine OH-Gruppe. Besonders bevorzugt werden 2-Hydroxy-2-sulfinatoessigsäuredinatriumsalz, 2-Hydroxyphenylhydroxymethylsulfinsäurenatriumsalz, 4-Methoxyphenyl-hydroxymethylsulfinsäurenatriumsalz, 2-Hydroxy-2-sulfinatoessigsäurezinksalz, 2-Hydroxy-2-sulfinatopropionsäuredinatriumsalz, 2-Hydroxy-2-sulfinatopropionsäureethylesternatriumsalz eingesetzt.

Die Komponente (d) wird im Rahmen der vorliegenden Erfindung vorzugsweise in Mengen von 0,01 bis 2 Gew.-%, besonders bevorzugt 0,02 bis 1 Gew.-% und insbesondere 0,05 bis 0,2 Gew.-%, bezogen auf das Gesamtgewicht der Komponenten (a) bis (f) eingesetzt.

Wenn das erfindungsgemäße Polyurethan als Polyurethan-Schaumstoff vorliegen soll, enthalten erfindungsgemäße Reaktionsmischungen noch Treibmittel (e). Dabei können alle zur Herstellung von Polyurethanen bekannten Treibmittel eingesetzt werden. Diese können chemische und/oder physikalische Treibmittel enthalten. Solche Treibmittel werden beispielsweise im "Kunststoffhandbuch, Band 7, Polyurethane", Carl Hanser Verlag, 3. Auflage 1993, Kapitel 3.4.5 beschrieben. Unter chemischen Treibmitteln werden dabei Verbindungen verstanden, die durch Reaktion mit Isocyanat gasförmige Produkte bilden. Beispiele für solche Treibmittel sind Wasser oder Carbonsäuren. Unter physikalischen Treibmitteln werden dabei Verbindungen verstanden, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe und andere Verbindungen, wie zum Beispiel perfluorierte Alkane, wie Perfluorhexan, Fluorchlorkohlenwasserstoffe, und Ether, Ester, Ketone, Acetale und/oder flüssiges Kohlendioxid. Dabei kann das Treibmittel in jeder beliebigen Menge eingesetzt werden. Vorzugsweise wird das Treibmittel in einer Menge eingesetzt, dass der resultierende Polyurethanschaumstoff eine Dichte von 10 bis 850 g/L, besonders bevorzugt 20 bis 800 g/L und insbesondere 25 bis 500 g/L aufweist. Besonders bevorzugt werden Treibmittel, enthaltend Wasser eingesetzt.

Als Kettenverlängerer und Vernetzungsmittel (f) können Verbindungen mit mindestens zwei gegenüber Isocyanaten reaktiven Gruppen eingesetzt werden, die ein Molekulargewicht von weniger als 400 g/mol aufweisen, wobei Moleküle mit zwei gegenüber Isocyanat reaktiven Wasserstoffatomen als Kettenverlängerer und Moleküle mit mehr als zwei gegenüber Isocyanat reaktiven Wasserstoffen als Vernetzer bezeichnet werden. Dabei kann jedoch auch auf das Kettenverlängerungs- oder Vernetzungsmittel verzichtet werden. Zur Modifizierung der mechanischen Eigenschaften, z.B. der Härte, kann sich allerdings der Zusatz von Kettenverlängerungsmitteln, Vernetzungsmitteln oder gegebenenfalls auch Gemischen davon als vorteilhaft erweisen.

Werden Kettenverlängerungsmittel und/oder Vernetzungsmittel (f) eingesetzt, können die bei der Herstellung von Polyurethanen bekannten Kettenverlängerer und/oder Vernetzer eingesetzt werden. Dies sind vorzugsweise niedermolekulare Verbindungen mit gegenüber Isocyanaten reaktiven funktionellen Gruppen, beispielsweise Glycerin, Trimethylolpropan, Glycol und Diamine. Weitere mögliche niedermolekulare Kettenverlängerungsmittel und/oder Vernetzungsmittel sind beispielsweise im "Kunststoffhandbuch, Band 7, Polyurethane", Carl Hanser Verlag, 3. Auflage 1993, Kapitel 3.2 und 3.3.2 angegeben.

Weiter können Hilfsmittel und/oder Zusatzstoffe (g) eingesetzt werden. Dabei können alle zur Herstellung von Polyurethanen bekannten Hilfs- und Zusatzstoffe verwendet werden. Genannt seien beispielsweise oberflächenaktive Substanzen, Schaumstabilisatoren, Zellregler, Trennmittel, Füllstoffe, Farbstoffe, Pigmente, Flammschutzmittel, Hydrolyseschutzmittel, fungistatische und bakteriostatisch wirkende Substanzen. Solche Substanzen sind bekannt und beispielsweise in "Kunststoffhandbuch, Band 7, Polyurethane", Carl Hanser Verlag, 3. Auflage 1993, Kapitel 3.4.4 und 3.4.6 bis 3.4.11 beschrieben.

Im Allgemeinen werden bei der Herstellung des erfindungsgemäßen Polyurethans die Polyisocyanate (a), die Polyole (b), den Schwefel Kohlenstoffverbindungen (d), und, falls eingesetzt die Treibmittel (e) und Kettenverlängerungsmittel und/oder Vernetzungsmittel (f) in solchen Mengen zur Umsetzung gebracht, dass das Äquivalenz-Verhältnis von NCO-Gruppen der Polyisocyanate (a) zur Summe der reaktiven Wasserstoffatome der Komponenten (b), (c), (d) und gegebenenfalls (e) und (f) 0,75 bis 1,5:1, vorzugsweise 0,80 bis 1,25:1 beträgt. Falls die zelligen Kunststoffe zumindest teilweise Isocyanuratgruppen enthalten, wird üblicherweise ein Verhältnis von NCO-Gruppen der Polyisocyanate (a) zur Summe der reaktiven Wasserstoffatome der Komponente (b), (c), (d) und gegebenenfalls (e) und (f) von 1,5 bis 20:1, vorzugsweise 1,5 bis 8:1 verwendet. Ein Verhältnis von 1:1 entspricht dabei einem Isocyanatindex von 100.

Die speziellen Ausgangssubstanzen (a) bis (g) für die Herstellung von erfindungsgemäßen Polyurethanen unterscheiden sich jeweils quantitativ und qualitativ nur geringfügig wenn als erfindungsgemäßes Polyurethan ein thermoplastisches Polyurethan, ein Weichschaumstoff, ein Halbhartschaumstoff, ein Hartschaumstoff oder ein Integralschaumstoff hergestellt werden soll. So werden beispielsweise für die Herstellung von massiven Polyurethanen keine Treibmittel eingesetzt sowie für thermoplastisches Polyurethan überwiegend streng difunktionelle Ausgangssubstanzen eingesetzt. Weiter lässt sich beispielsweise über die Funktionalität und die Kettenlänge der höhermolekularen Verbindung mit mindestens zwei reaktiven Wasserstoffatomen die Elastizität und Härte des erfindungsgemäßen Polyurethans variieren. Solche Modifikationen sind dem Fachmann bekannt.

Die Edukte für die Herstellung eines massiven Polyurethans werden beispielsweise in EP 0989146 oder EP 1460094, die Edukte für die Herstellung eines Weichschaums in PCT/EP2005/010124 und EP 1529792, die Edukte für die Herstellung eines Halbhartschaums im "Kunststoffhandbuch, Band 7, Polyurethane", Carl Hanser Verlag, 3. Auflage 1993, Kapitel 5.4, die Edukte für die Herstellung eines Hartschaumstoffs in PCT/EP2005/010955 und die Edukte für Herstellung eines Integralschaumstoffs in EP 364854, US 5506275 oder EP 897402 beschrieben. Zu den in diesen Dokumenten beschriebenen Edukten wird dann jeweils noch die Schwefel-Kohlenstoffverbindung (d) zugegeben.

Polyurethane werden häufig nach dem zwei-Komponenten-Verfahren hergestellt. Dazu wird eine Isocyanatkomponente, enthaltend die Komponente (a) und eine Polyolkomponente, enthaltend die Komponenten (b), (c), (d) und, falls gewünscht (e), (f) und (g) zur Herstellung der Polyurethane vermischt. Dieses zwei-Komponenten-Verfahren ist einfacher zu handhaben. Ein großer Vorteil der erfindungsgemäßen Komponente (d) ist, dass diese in der Polyolkomponente löslich ist. So kann beispielsweise die Komponente (d) direkt in die Polyolkomponente gegeben werden oder diese wird in Wasser gelöst und dann mit den übrigen Komponenten zur Polyolkomponente vereinigt.

Neben dem erfindungsgemäßen Verfahren ist auch ein Polyurethan, erhältlich nach einem erfindungsgemäßen Verfahren Gegenstand der Erfindung. Die erfindungsgemäßen Polyurethane zeichnen sich durch geringe Emissionen und damit auch durch eine geringe Geruchsemission aus. Insbesondere zeichnen sich erfindungsgemäße Polyurethane durch eine geringe Formaldehydemission aus. Daher werden erfindungsgemäße Polyurethane vorzugsweise in geschlossenen Räumen eingesetzt, beispielsweise als thermische Isoliermaterialien in Wohngebäuden, wie Isolierungen für Rohre und Kühlschränke, im Möbelbau, beispielsweise als Dekorelemente oder als Sitzpolster sowie im Automobilinnenraum, beispielsweise als Lenkräder, Armaturenbretter, Türverkleidungen, Teppichhinterschäumungen, akustische Schaumstoffe, wie Dachhimmel, sowie Kopfstützen, Sitzschäume oder Schaltknäufe. Dabei werden insbesondere Schwefelkohlenstoffverbindungen bevorzugt, die gegenüber Isocyanaten eine oder mehrere reaktive Gruppen aufweisen. Diese ermöglichen es, dass die Schwefelkohlenstoffverbindung (d) an das Polyurethangerüst angebunden wird was zum einen zu einer längeren Wirksamkeit, speziell unter anspruchsvollen Bedingungen, wie hohen Temperaturen oder Einstrahlung von Sonnenlicht, zu längerer Aldehydreduktion führen als ohne die gegenüber Isocyanat reaktiven Gruppen. Dazu kommt, dass Schwefelkohlenstoffverbindungen (d) mit einbaubaren Gruppen zu Polyurethanen führt, die neben einer geringen Emission von Aldehyden allgemein geringere Emissionen flüchtiger organischer Verbindungen zeigen.

Die Erfindung soll im Folgenden anhand von Beispielen verdeutlicht werden.

Ausgangsmaterialien:

| | |
|---|---|
| Polyol A: | Polyetherol mit einer OH-Zahl 28 mg KOH/g und einer Funktionalität von 2.7 auf Basis von Ethylenoxyd und Propylenoxid, einem Propylenoxidgehalt von 84 Gew.-% und einem Ethylenoxidgehalt von 14 Gew.-% |
| Polyol B: | Polyetherol mit einer OH-Zahl 250 mg KOH/g und einer Funktionalität von 2.0 auf Basis von Polyol A (35%), Propylenoxid (45%) und Dimethylaminopropylamin (20%) |
| TEOA: | Triethanolamine |
| Isopur SU-12021: | Schwarzpaste der Firma ISL-Chemie |
| Jeffcat ZF10: | Katalysator der Firma Huntsman |
| Jeffcat DPA: | Katalysator der Firma Huntsman |

### Additive

| | |
|---|---|
| V1: | Natriumsulfit |
| V2: | Natriumbisulfite |
| A1: | 2-Hydroxy-2-sulfinatoessigsäure, Dinatriumsalz |
| A2: | Hydroxymethansulfinsäure, Natriumsalz |
| V3: | Hydroxymethansulfonsäure, Natriumsalz |
| V4: | 2-Hydroxy-ethansulfonsäure, Natriumsalz |
| V5: | 1,2-Dihydroxyethan-1,2-disulfonsäure, Dinatriumsalz |
| V6: | 1,2-Dihydroxypentan-1,5-disulfonsäure, Dinatriumsalz |

### Isocyanat A: Mischung von 85 Teile Carbodiimid-modifiziertes 4,4'-MDI und 15 Teile polymeres Diphenylmethandiisocyanat PMDI mit einem NCO-Gehalt von 27.1

Die Mischung A wurde durch Vermischen von folgenden Komponenten hergestellt:

| | |
|---|---|
| 92.4 | Gew.-Teile Polyol A |
| 3.0 | Gew.-Teile Polyol B |
| 1.5 | Gew.-Teile TEOA |
| 0.5 | Gew.-Teile Isopur SA-21050 |
| 1.9 | Gew.-Teile Wasser |
| 0.4 | Gew.-Teile Jeffcat DPA |
| 0.2 | Gew.-Teile Jeffcat ZF10 |
| 0.1 | Gew.-Teile Verbindungen V1, V2 bzw. A1 bis A6 gemäß Tabelle 1 |

Dabei wurden die Additive V1 bis V6 sowie A1 und A2 in Form ihrer wässrigen Lösungen eingesetzt.

Die Mischung A und die Isocyanat-Komponente A sowie die Addtive gemäß Tabelle 1 wurden bei einem Isocyanatindex von 100 miteinander vermischt und in eine geschlossene Form gegeben, so dass Formteile mit einer mittleren Dichte von 160 g/L erhalten wurden.

Zur Bestimmung von Formaldehyde wurde analog ASTM D-5116-06 vorgegangen. Die Kammergröße betrug 4,7 Litern. Als Polyurethanproben wurden Stücke mit einer Größe von 110 mm x 100 mm x 25 mm eingesetzt. Wurden Formschaumstoffe geprüft wurden Teile aus dem Innern des Schaumstoffs eingesetzt. Die Temperatur in der Meßkammer betrug während der Messung 65 °C, die relative Luftfeuchtigkeit 50 %. Die Luftaustauschrate betrug 3,0 Liter pro Stunde. Der Abluftstrom mit flüchtigen Aldehyden aus dem Polyurethan wurden über 120 Minuten durch eine Kartusche mit 2,4-Dinitrophenylhydrazin beschichtetes Silika geleitet. Die DNPH-Kartusche wurde anschließend mit einem Gemisch von Acetonitril und Wasser eluiert. Die Konzentration von Formaldehyd im Eluat wurde mittels HPLC bestimmt. Nach diesem Aufbau liegt die Nachweisgrenze für Formaldehydemissionen bei ≤ 11 µg/m³.

Tabelle 1: In der Kammer bestimmte Formaldehydwerte der erhaltenen Polyurethanschaumstoffe ohne Zugabe von Additiven (Referenz) sowie bei Zugabe der jeweiligen Additiven A1 oder A2 in den angegebenen Konzentrationen, jeweils angegeben in Gewichtsteilen bezogen auf das Gesamtgewicht der Mischung A.

**Tabelle 1**

| | Konz. in A | Formaldehyd (µg/m³) |
|---|---|---|
| Referenz | - | 792 |
| V1 | 0.10% | 301 |
| V2 | 0.10% | 152 |
| A1 | 0.10% | < 11 |
| A2 | 0.10% | < 11 |
| V3 | 0.10% | 218 |
| V4 | 0.10% | 285 |
| V5 | 0.10% | 16 |
| V6 | 0.10% | < 11 |

Die Additive V1 bis V6 und A1 und A2 wurde mit den beschriebenen Polyolen und Katalysatoren bei Raumtemperatur vermischt. Zur Bestimmung der Phasenstabilität wurde das Absetzverhalten beobachtet. Ergebnisse sind in Tabelle 2 angegeben.

**Tabelle 2**

| | Konz. in A | Absetzverhalten |
|---|---|---|
| V1 | 0.10% | weißer Niederschlag nach 2 Tagen |
| V2 | 0.10% | weißer Niederschlag nach 2 Tagen |
| A1 | 0.10% | klare Mischung nach 3 Monaten |
| A2 | 0.10% | klare Mischung nach 6 Wochen |
| V3 | 0.10% | klare Mischung nach 14 Tagen |
| V4 | 0.10% | klare Mischung nach 14 Tagen |
| V5 | 0.10% | klare Mischung nach 7 Tagen* |
| V6 | 0.10% | klare Mischung nach 7 Tagen* |

| | | |
|---|---|---|
| * Danach Entstehung einer Dispersion | | |

In einer weiteren Versuchsreihe wurden die A-Komponenten, die unter Zusatz der Additive V1, V2, A1 und A2 erhalten wurden vor dem Umsetzen mit der Isocyanatkomponente sieben Tage bei Raumtemperatur stehen gelassen. Anschließend wurde die A-Komponenten durch Rühren homogenisiert und analog zu den Versuchen gemäß Tabelle 1 Schaumstoffproben hergestellt und deren Formaldehydemissionen ermittelt. Die Proben zu den Additiven V1 und V2 ergaben keine Reduktion der Formaldehydemissionen. Bei Einsatz der Additive A1 und A2 wurden in den Schaumstoffproben eine Reduktion der Aldehydemissionen analog zu den Beispielen in Tabelle 1 ermittelt.

## Patentansprüche

1. Verfahren zur Herstellung von Polyurethanen bei dem man
(a) Polyisocyanat,
(b) polymeren Verbindungen mit gegenüber Isocyanaten reaktiven Gruppen,
(c) Katalysatoren,
(d) Schwefel-Kohlenstoffverbindungen, enthaltend ein oder mehrere Anionen, ausgewählt aus der Gruppe bestehend aus Sulfinsäurederivaten gemäß der allgemeinen Formel (I) 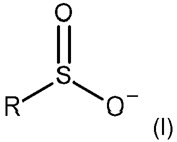 wobei R für einen beliebigen substituierten oder unsubstituierten Kohlenwasserstoffrest steht mit der Maßgabe, dass das Kohlenstoffatom, das an das Schwefelatom gebunden ist, ein aliphatisches Kohlenstoffatom ist, und gegebenenfalls
(e) Treibmittel,
(f) Kettenverlängerungs- und oder Vernetzungsmittel und
(g) Hilfsmittel und/oder Zusatzstoffe
zu einer Reaktionsmischung vermischt und die Reaktionsmischung zum Polyurethan ausreagieren lässt.

2. Verfahren nach Anspruch 1, **dadurch gekennzeichnet, dass** der Rest R für aliphatische Reste mit 2 bis 10 Kohlenstoffatomen steht.

3. Verfahren nach Anspruch 1 oder Anspruch 2, **dadurch gekennzeichnet, dass** der Rest R für Reste steht, die gegenüber Isocyanat reaktive Gruppen enthalten.

4. Verfahren nach einem der Ansprüche 1 bis 3, **dadurch gekennzeichnet, dass** der Rest R für Reste steht, die Säuregruppen oder deren Derivate enthalten.

5. Verfahren nach einem der Ansprüche 1 bis 4, **dadurch gekennzeichnet, dass** die Schwefelkohlenstoffverbindung (d) ein Metallion M als Kation enthält, ausgewählt aus der Gruppe, bestehend aus Alkalimetallen, Erdalkalimetallen oder Übergangsmetallen zum Ladungsausgleich.

6. Verfahren nach einem der Ansprüche 1 bis 5, **dadurch gekennzeichnet, dass** die Komponente (d), bezogen auf das Gesamtgewicht der Komponenten (a) bis (f) zu 0.01 bis 2 Gew.-% enthalten ist.

7. Verfahren nach einem der Ansprüche 1 bis 6, **dadurch gekennzeichnet, dass** die polymeren Verbindungen mit gegenüber Isocyanaten reaktiven Gruppen (b) Polyetherole enthalten.

8. Verfahren nach einem der Ansprüche 1 bis 7, **dadurch gekennzeichnet, dass** die Katalysatoren (c) einbaubare Aminkatalysatoren enthalten.

9. Verfahren nach Anspruch 8, **dadurch gekennzeichnet, dass** als einbaubare Katalysatoren Verbindungen eingesetzt werden, die neben der bzw. den gegenüber Isocyanaten reaktiven Gruppen eine oder mehrere tertiäre, aliphatische Aminogruppen aufweisen.

10. Verfahren nach Anspruch 8, **dadurch gekennzeichnet, dass** mindestens eine tertiäre Aminogruppe zwei Reste, unabhängig voneinander ausgewählt aus Methyl- und Ethylrest, sowie einen weiteren organischen Rest trägt.

11. Verfahren nach einem der Ansprüche 1 bis 10, **dadurch gekennzeichnet, dass** das Polyurethan ein Polyurethanschaumstoff mit einer mittleren Dichte von 20 bis 850 g/L ist.

12. Verfahren nach einem der Ansprüche 1 bis 10, **dadurch gekennzeichnet, dass** das Polyurethan ein kompaktes Polyurethan mit einer mittleren Dichte von mehr als 850 g/L ist.

13. Verfahren nach Anspruch 12, **dadurch gekennzeichnet, dass** das Polyurethan eine Kabelummantelung ist.

14. Polyurethan, herstellbar nach einem Verfahren gemäß einem der Ansprüche 1 bis 13.

15. Verwendung von Polyurethanen nach Anspruch 14 im Innenraum von Verkehrsmitteln.

## Claims

1. A process for the production of polyurethanes where
(a) polyisocyanate,
(b) polymeric compounds having groups reactive toward isocyanates,
(c) catalysts,
(d) sulfur-carbon compounds comprising one or more anions selected from the group consisting of sulfinic acid derivatives of the general formula (I) 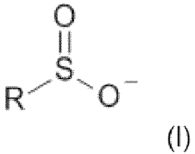 where R is any desired substituted or unsubstituted hydrocarbon moiety, with the proviso that the carbon atom bonded to the sulfur atom is an aliphatic carbon atom, and optionally
(e) blowing agent,
(f) chain extender and/or crosslinking agent, and
(g) auxiliaries and/or additives
are mixed to give a reaction mixture, and the reaction mixture is allowed to complete a reaction to give the polyurethane.

2. The process according to claim 1, wherein the moiety R is aliphatic moieties having from 2 to 10 carbon atoms.

3. The process according to claim 1 or claim 2, wherein the moiety R is moieties comprising groups reactive toward isocyanate.

4. The process according to any of claims 1 to 3, wherein the moiety R is moieties comprising acid groups or comprising derivatives thereof.

5. The process according to any of claims 1 to 4, wherein the sulfur-carbon compound (d) comprises a metal ion M as cation selected from the group consisting of alkali metals, alkaline earth metals, and transition metals, for charge equalization.

6. The process according to any of claims 1 to 5, wherein the quantity comprised of component (d), based on the total weight of components (a) to (f), is from 0.01 to 2% by weight.

7. The process according to any of claims 1 to 6, wherein the polymeric compounds (b) having groups reactive toward isocyanates comprise polyetherols.

8. The process according to any of claims 1 to 7, wherein the catalysts (c) comprise incorporable amine catalysts.

9. The process according to claim 8, wherein compounds used as incorporable catalysts have, alongside the group(s) reactive toward isocyanates, one or more tertiary aliphatic amino groups.

10. The process according to claim 8, wherein at least one tertiary amino group bears two moieties selected mutually independently from methyl and ethyl moiety, and also bears another organic moiety.

11. The process according to any of claims 1 to 10, wherein the polyurethane is a polyurethane foam with an average density of from 20 to 850 g/L.

12. The process according to any of claims 1 to 10, wherein the polyurethane is a compact polyurethane with an average density of more than 850 g/L.

13. The process according to claim 12, wherein the polyurethane is cable-sheathing.

14. A polyurethane which can be produced by a process according to claims 1 to 13.

15. The use of polyurethanes according to claim 14 in the interior of means of transport.

## Revendications

1. Procédé de fabrication de polyuréthanes, selon lequel :
(a) un polyisocyanate,
(b) des composés polymères contenant des groupes réactifs avec les isocyanates,
(c) des catalyseurs,
(d) des composés de soufre-carbone, contenant un ou plusieurs anions, choisis dans le groupe constitué par les dérivés de l'acide sulfinique selon la formule générale (I) 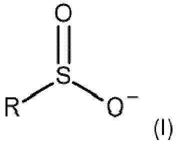 dans laquelle R représente un radical hydrocarboné substitué ou non substitué quelconque, à condition que l'atome de carbone auquel l'atome de soufre est relié soit un atome de carbone aliphatique, et éventuellement
(e) des agents gonflants,
(f) des agents d'allongement de chaînes et/ou de réticulation et
(g) des adjuvants et/ou des additifs,
sont mélangés en un mélange réactionnel et le mélange réactionnel est laissé réagir pour former le polyuréthane.

2. Procédé selon la revendication 1, **caractérisé en ce que** le radical R représente des radicaux aliphatiques de 2 à 10 atomes de carbone.

3. Procédé selon la revendication 1 ou la revendication 2, **caractérisé en ce que** le radical R représente des radicaux qui contiennent des groupes réactifs avec les isocyanates.

4. Procédé selon l'une quelconque des revendications 1 à 3, **caractérisé en ce que** le radical R représente des radicaux qui contiennent des groupes acides ou leurs dérivés.

5. Procédé selon l'une quelconque des revendications 1 à 4, **caractérisé en ce que** le composé de soufre-carbone (d) contient un ion métallique M en tant que cation, choisi dans le groupe constitué par les métaux alcalins, les métaux alcalino-terreux ou les métaux de transition, pour l'équilibrage des charges.

6. Procédé selon l'une quelconque des revendications 1 à 5, **caractérisé en ce que** le composant (d) est contenu, par rapport au poids total des composants (a) à (f), à hauteur de 0,01 à 2 % en poids.

7. Procédé selon l'une quelconque des revendications 1 à 6, **caractérisé en ce que** les composés polymères contenant des groupes réactifs avec les isocyanates (b) contiennent des polyétherols.

8. Procédé selon l'une quelconque des revendications 1 à 7, **caractérisé en ce que** les catalyseurs (c) contiennent des catalyseurs aminés montables.

9. Procédé selon la revendication 8, **caractérisé en ce que** des composés qui comprennent en plus du ou des groupes réactifs avec les isocyanates un ou plusieurs groupes amino aliphatiques tertiaires sont utilisés en tant que catalyseurs montables.

10. Procédé selon la revendication 8, **caractérisé en ce qu'**au moins un groupe amino tertiaire porte deux radicaux, choisis indépendamment l'un de l'autre parmi un radical méthyle et éthyle, ainsi qu'un autre radical organique.

11. Procédé selon l'une quelconque des revendications 1 à 10, **caractérisé en ce que** le polyuréthane est une mousse de polyuréthane ayant une densité moyenne de 20 à 850 g/l.

12. Procédé selon l'une quelconque des revendications 1 à 10, **caractérisé en ce que** le polyuréthane est un polyuréthane compact ayant une densité moyenne de plus de 850 g/l.

13. Procédé selon la revendication 12, **caractérisé en ce que** le polyuréthane est un enrobage de câble.

14. Polyuréthane, pouvant être fabriqué par un procédé selon l'une quelconque des revendications 1 à 13.

15. Utilisation de polyuréthanes selon la revendication 14 dans l'espace intérieur de moyens de transport.
